# EUROPÄISCHE PATENTSCHRIFT

(11) **EP 1 755 921 B1**
(45) Veröffentlichungstag und Bekanntmachung des Hinweises auf die Patenterteilung: **18.02.2009**
(21) Anmeldenummer: 05742839.3
(22) Anmeldetag: 19.05.2005
(51) Int. Cl.: B60Q 1/48

(54) **VERFAHREN UND VORRICHTUNG ZUR UNTERSTÜTZUNG EINES EINPARKVORGANGES EINES FAHRZEUGES**
METHOD AND DEVICE FOR ASSISTING THE PERFORMANCE OF A PARKING MANEUVER OF A VEHICLE
PROCEDE ET DISPOSITIF D'ASSISTANCE POUR FACILITER UNE OPERATION DE STATIONNEMENT D'UN VEHICULE

(30) Priorität: 02.06.2004 DE 102004026848; 04.04.2005 DE 102005015354
(43) Veröffentlichungstag der Anmeldung: 28.02.2007
(73) Patentinhaber: ROBERT BOSCH GMBH, 70442 Stuttgart (DE)
(72) Erfinder: SCHMID, Roland, 70599 Stuttgart (DE); DITTRICH, Thomas, 75242 Neuhausen (DE); DANZ, Christian, 70469 Stuttgart (DE); SEITER, Michael, 71272 Renningen (DE); KROPF, Thomas, 72770 Reutlingen (DE)
(86) Internationale Anmeldenummer: PCT/EP2005/052312
(87) Internationale Veröffentlichungsnummer: WO 2005/118339

(56) Entgegenhaltungen:
- EP-A- 0 735 383
- WO-A-03/070517
- US-A- 4 931 930

## Beschreibung

### Stand der Technik

Die Erfindung betrifft ein Verfahren zur Unterstützung eines Einparkvorganges eines eine Sensoranordnung aufweisenden Fahrzeuges in eine seitlich zu dem Fahrzeug angeordnete Parklücke, wobei mittels der Sensoranordnung die Parklücke während eines Vorbeifahrens des Fahrzeuges an der Parklücke erfasst wird. Außerdem betrift die Erfindung eine Vorrichtung zur Durchführung eines solchen Verfahrens für ein Fahrzeug.

Ein vorgenanntes Verfahren ist aus einem als Parklückenvermessung (PLV) bekannten Verfahren, das einen Fahrer des Fahrzeuges bei einer Suche nach einer für sein Fahrzeug ausreichend großen Parklücke unterstützt, als dessen Bestandteil geläufig. Die Parklückenvermessung kann mit einer Einrichtung zum semiautonomen Einparken zusammenarbeiten, bei der der Fahrer Fahr- und Bremspedal des Fahrzeuges bedienen muss, wohingegen ein Lenken des Fahrzeuges entweder durch den Fahrer oder automatisch ausgeführt werden kann. Eine solche Einrichtung, die das Fahrzeug in eine ausgewählte Parklücke führt, ist unter der Bezeichnung semiautonomer Einparkassistent (SPA, semi-autonomous parking assistant) bekannt. Der semiautonome Einparkassistent berechnet eine günstige Bahnkurve für das Einparken des Fahrzeuges und informiert den Fahrer, zum Beispiel mit Hilfe von akustischen Signalen, über die Aktionen, die er auszuführen hat, um das Fahrzeug einwandfrei in der Parklücke abzustellen. Ein Grundsatz dabei ist, dass das Fahrzeug eine seitliche Parklückenbegrenzung, beispielsweise einen Bordstein oder eine Hauswand, nicht touchieren oder gar überfahren darf. Hierzu ist gegebenenfalls auch ein auf eigener Wahrnehmung und Entscheidung fußendes Eingreifen des Fahrers erforderlich.

Aus der EP 0 735 383 A1 ist eine gattunsgemäße Vorrichtung zur Erfassung und Ortsbestimmung eines Fahrzeugs bekannt, bei dem verschiedene Messbündel beiderseitig des Fahrzeugs ausgestrahlt werden. Hiermit wird der Abstand des Fahrzeugs zur Hindernissen in der Fahrzeugumgebung ermittelt. Die Erfassung dient dazu, freie, geeignete Parklücken in der Umgebung des Fahrzeugs aufzufinden.

Aus der WO03/070517 A1 ist ein Verfahren zum Einparken eines Fahrzeugs gezeigt, bei dem sowohl Abstände des Fahrzeugs zu Hindernissen, als auch die Länge und/oder die Breite einer Parklücke bestimmt wird. Die Sensoren werden hierbei sowohl zum Vermessen der Parklücke, als auch zur Hinderniserfassung bei einem nachfolgenden Einparkvorgang verwendet.

Aus der US 4,931,930 ist eine automatische Einparkvorrichtung bekannt, bei der die Abmaße einer Parklücke vermessen werden und anschließend ein automatisches bzw. halbautomatisches Einparken von einer Ausgangsposition in die erfasste Parklücke erfolgt.

Der Erfindung liegt ausgehend vom Stand der Technik die Aufgabe zugrunde, ein Verfahren der eingangs genannten Art anzugeben, das eine erhöhte Genauigkeit und verminderte Kollisionsgefahr aufweist. Darüber hinaus liegt der Erfindung die Aufgabe zugrunde, eine Vorrichtung zur Durchführung eines solchen Verfahrens zu schaffen.

Die erstgenannte Aufgabe wird erfindungsgemäß mit einem Verfahren gemäß Anspruch 1 gelöst.

Die oben zweit genannte Aufgabe wird erfindungsgemäß mit einer Vorrichtung gemäß Anspruch 10 gelöst.

### Vorteile der Erfindung

Das erfindungsgemäße Verfahren, nach welchem zunächst die Parklücke beim Vorbeifahren des einzuparkenden Fahrzeuges erfasst wird, betrifft insbesondere ein. Rückwärtseinparken eines Fahrzeuges in eine parallel zur Fahrtrichtung ausgerichtete Parklücke; es kann sich aber genauso vorteilhaft beispielsweise auch auf ein Vorwärtseinparken in eine parallel zur Fahrtrichtung ausgerichtete Parklücke oder ein Rückwärts- oder ein Vorwärtseinparken in eine senkrecht oder unter einem Winkel; zum Beispiel von 45°, zur Fahrtrichtung ausgerichtete Parklücke beziehen. Zur Erfassung der Parklücke sind in der Sensoranordnung bevorzugt seitlich bezüglich des Fahrzeuges ausgerichtete Sensoren vorgesehen. Mittels der Sensoranordnung erfasste Messwerte können vorzugsweise in einer Auswerteeinheit, beispielsweise einem Steuergerät, insbesondere Steuergerät für die Parklückenvermessung und/oder den semiautonomer Einparkassistenten, weiterverwendet werden. Der besondere Vorteil der Erfindung besteht darin, dass während des Vorbeifahrens des Fahrzeuges an der Parklücke nicht nur die Parklücke erkannt und gegebenenfalls vermessen wird, sondern dass zusätzlich ein Abstand zu einem Hindernis auf der der Parklücke abgewandten Längsseite des Fahrzeuges, das heißt beispielsweise am gegenüberliegenden Fahrbahnrand, gemessen wird. Diese Messung des Abstandes zwischen dem Fahrzeug und dem Hindernis, das zum Beispiel eine Häuserwand, ein Zaun oder ein parkendes Fahrzeug auf einer der Parklücke gegenüberliegenden Straßenseite sein kann, lässt eine sichere Aussage darüber zu, ob bei einem Einparken in die Parklücke eine Kollision des einparkenden Fahrzeuges, insbesondere einer vorderen Ecke dieses Fahrzeuges, mit dem Hindernis zu befürchten ist. Durch die Erhöhung der Aussagekraft und Genauigkeit der Parklückenvermessung gemäß der Erfindung kann beispielsweise ein semiautonomer Einparkassistent das Fahrzeug wesentlich präziser und unter noch zuverlässigerer Kollisionsvermeidung ohne korrigierenden Eingriff des Fahrers in die Parklücke leiten. Mit der erfindungsgemäßen Abstandserfassung des der Parklücke abgewandten Umfeldes des Fahrzeuges ergeben sich insbesondere in Ballungszentren, die durch zunehmende Verkehrsdichte und verstärkte Bebauung freier Flächen geprägt sind, erhebliche Vorteile für den Fahrer, der aufgrund knapper werdenden zur Verfügung stehenden Parkraumes und aufwendiger Suche nach einer geeigneten Parklücke zunehmend belastet ist. Die Erfindung entlastet den Fahrer und trägt so zu einer zusätzlichen Erhöhung der Verkehrssicherheit bei. Außerdem kann der Verkehrsfluss vorteilhaft erhöht werden, da lang andauernde und/oder erfolglose Einparkvorgänge vermieden werden können. Mit der erfindungsgemäßen, für ein Fahrzeug vorgesehenen Vorrichtung kann auf besonders zuverlässige Weise und ohne Einschränkung, insbesondere Verzögerung, des Einparkvorganges eine Abstandsmessung auf der der Parklücke abgewandten Fahrzeugseite vorgenommen werden. Vorzugsweise umfasst die Vorrichtung eine Auswerteeinheit, insbesondere zur Bestimmung, Beurteilung und Weiterverarbeitung von aus den Abstandsmessungen zu gewinnenden Messwerten, sowie gegebenenfalls eine Warnvorrichtung zur Signalisation einer Kollisionsgefahr an den Fahrer und gegebenenfalls ein Überbrückungselement zur Unterdrückung der Signalisation. Die Erfindung trägt vorteilhaft und zielgerichtet dazu bei, nicht nur Kollisionen mit die Parklücke begrenzenden Hindernissen, sondern auch Kollisionen mit anderen Hindernissen im Verkehrsraum sowie an der Parklücke vorbei fließendem Verkehr zu vermeiden. Besonders geeignet ist die Erfindung, bei einem semiautonomen Einparken in engen Straßen während des Einparkvorganges bei einem Rückwärtsfahren zum Beispiel ein Eintauchen in eine Gegenfahrbahn oder eine Kollision mit einem gegenüberliegenden Bordstein oder eine dort vorhandene Mauer zu vermeiden. Erfindungsgemäß ermittelte Abstandsinformationen über Hindernisse auf der der Parklücke abgewandten Fahrzeugseite können vorteilhaft zum Beispiel für eine Bahnplanung eines semiautonomen Einparkassistenten genutzt werden. Von besonderem Vorteil ist die Möglichkeit, einem Bediener des Fahrzeuges insbesondere in engen Straßen mit hoher Aussagesicherheit lediglich diejenigen Parklücken als geeignet anzuzeigen, in die er anschließend mit Unterstützung eines Einparkassistenten auch erfolgreich einfahren kann.

Gemäß einer vorteilhaften Weiterbildung der Erfindung wird während eines Einfahrens des Fahrzeuges in die Parklücke mittels der Sensoranordnung ein Abstand zu dem Hindernis auf der ersten Längsseite des Fahrzeuges gemessen. Auf diese Weise können insbesondere auch während des Einparkvorganges eintretende Veränderungen in dem Umfeld des parkenden Fahrzeuges, insbesondere an diesem Fahrzeug und der Parklücke vorbei fließender Verkehr, in dem Verfahren berücksichtigt und so die Präzision und Sicherheit des Einparkvorganges weiter erhöht werden.

Beispielsweise eine Kollision mit bereits abgestellten, die Parklücke begrenzenden Automobilen kann zuverlässig vermieden werden, wenn gemäß einer anderen vorteilhaften Weiterbildung der Erfindung während des Vorbeifahrens des Fahrzeuges an der Parklücke und/oder während des Einfahrens des Fahrzeuges in die Parklücke mittels der Sensoranordnung ein Abstand zu einem Hindernis auf der der Parklücke zugewandten, zweiten Längsseite des Fahrzeuges gemessen wird. So können beispielsweise bereits während des Vorbeifahrens an der Parklücke seitlich, und zwar sowohl an der rechten als auch an der linken Fahrzeugseite, ausgerichtete Parklückenvermessungssensoren zur Umgebungserfassung eingesetzt und eine Hindernisabstandsmessung auf der rechten und auf der linken Fahrzeugseite vorgenommen werden. Diese zusätzlichen Informationen können vorteilhaft in eine Bewertung beispielsweise der Länge der Parklücke einfließen.

Die Zuverlässigkeit des Verfahrens wird insbesondere im Hinblick auf sich örtlich verändernde Hindernisse, wie zum Beispiel fließenden Verkehr, und sich ändernde geometrische Verhältnisse bezüglich der Anordnung des einparkenden Fahrzeuges gegenüber in seinem Umfeld befindlichen Hindernissen weiter erhöht, wenn gemäß einer anderen vorteilhaften Weiterbildung der Erfindung der Abstand zu dem Hindernis auf der ersten Längsseite und/oder der Abstand zu dem Hindernis auf der zweiten Längsseite des Fahrzeuges während des Vorbeifahrens an der Parklücke und/oder während des Einfahrens in die Parklücke kontinuierlich gemessen wird. Dabei bedeutet kontinuierliches Messen nicht nur unterbrechungsfreies Messen, sondern auch zyklisches Messen, wobei zwischen einzelnen Messungen Zeitabstände verbleiben. Der letztgenannte Fall liegt zum Beispiel bei fortwährenden, gepulsten Messungen, die ebenfalls unter das erfindungsgemäße kontinuierliche Messen fallen, vor.

Der Einparkvorgang wird weiter vereinfacht und der Fahrer zusätzlich unterstützt, wenn gemäß einer anderen vorteilhaften Weiterbildung der Erfindung während des Vorbeifahrens des Fahrzeuges an der Parklücke mittels der Sensoranordnung die Länge der Parklücke gemessen wird. Die Vermessung der Parklückenlänge erfolgt vorzugsweise beim längsseitigen Vorbeifahren, wobei von mindestens einem Abstandssensor der Sensoranordnung des vorbeifahrenden, einzuparkenden Fahrzeuges die seitliche Entfernung beispielsweise zu bereits parkenden, weiteren Fahrzeugen zyklisch gemessen wird. Die einzelnen Messwerte werden zum Beispiel in einer Auswerteeinheit gespeichert. Nach dem Vorbeifahren können die Abstandsmesswerte ausgewertet werden, indem sie mit der gefahrenen Wegstrecke, die zum Beispiel von Radimpulszählern des zu parkenden Fahrzeuges erfasst wird, verknüpft werden. Als Ergebnis dieser Auswertung können beispielsweise die Eckpositionen der potentiellen Parklücke relativ zu der gefahrenen Bahn des zu parkenden Fahrzeuges bestimmt werden.

Besonders günstig ist es, wenn gemäß einer anderen vorteilhaften Weiterbildung der Erfindung während des Vorbeifahrens des Fahrzeuges an der Parklücke mittels der Sensoranordnung die Tiefe der Parklücke gemessen wird. Ein Maß für die Tiefe kann beispielsweise anhand einer gemessenen Fahrzeugtiefe bereits parkender Fahrzeuge mittels der Auswerteeinheit grob abgeschätzt werden.

Grundsätzlich ist beispielsweise bereits der gemessene, absolute Abstandswert von hoher Bedeutung für eine Präzisierung des Einparkvorganges. Von besonderem Vorteil ist es hingegen, wenn gemäß einer anderen Weiterbildung der Erfindung zumindest der gemessene Abstand zu dem Hindernis auf der ersten Längsseite des Fahrzeuges in einer Auswerteeinheit mit einem in der Auswerteeinheit gespeicherten Mindestabstand verglichen wird, so dass die Auswerteeinheit eine Bewertung des gemessenen Abstandes vornehmen und diese für das weitere Verfahren berücksichtigen kann. Der gespeicherte Mindestabstand kann zum Beispiel die Fahrzeuggeometrie und/oder den maximalen Lenkeinschlagwinkel des einzuparkenden Fahrzeuges berücksichtigen und gegebenenfalls durch einen Bediener veränderbar in der Auswerteeinheit abgelegt sein.

Gemäß einer vorteilhaften Weiterbildung der Erfindung erfolgt bei einem Unterschreiten des Mindestabstandes durch den gemessenen Abstand eine Signalisation eines Geringabstandes an einen Fahrzeugbediener, insbesondere Fahrer des Fahrzeuges. Damit kann der Fahrzeugbediener zu erhöhter Aufmerksamkeit angeregt werden und gegebenenfalls den Einparkvorgang abbrechen oder in einer Weise in den Einparkvorgang korrigierend eingreifen, dass eine Kollision vermieden wird. Die Signalisation kann beispielsweise in einem Bereich einer Armaturentafel des Fahrzeuges und mittels Aussendung eines Warntones und/oder Aufleuchten eines Warnfeldes auf einem Bildschirm und/oder Aufblinken einer Warnleuchte erfolgen.

Eine besonders hohe Entlastung des Fahrers kann vorteilhaft erfolgen, wenn gemäß der Erfindung von der Auswerteeinheit unter Berücksichtigung zumindest des gemessenen Abstandes zu dem Hindernis auf der ersten Längsseite des Fahrzeuges eine von dem Fahrzeug während des Einparkvorganges zu verfolgende Einparkbahn ermittelt wird. Diese Einparkbahn kann dem Fahrer beispielsweise visualisiert oder in Form von akustischen Anweisungen übermittelt werden.

Es ist denkbar, dass die Sensoranordnung beispielsweise einen der Parklücke gegenüberliegenden Bordstein als Hindernis detektiert, der zum Einparken jedoch überfahren werden kann. Zum Beispiel in einem solchen Fall ist es von Vorteil, wenn gemäß einer Weiterbildung der Erfindung mittels eines Überbrückungselementes die Signalisation des Geringabstandes und/oder die Berücksichtigung des gemessenen Abstandes zur Einparkbahnermittlung unterdrückt wird. Das Überbrückungselement kann zum Beispiel eine Logikschaltung in der Auswerteeinheit aufweisen oder beispielsweise eine von dem Fahrer des Fahrzeuges betätigbare Überbrückungstaste umfassen.

### Zeichnung

Ausführungsbeispiele der Erfindung sind in der Zeichnung schematisiert dargestellt und werden nachfolgend näher beschrieben. Es zeigen
Figur 1 eine erste Einparksituation mit einem an einer Parklücke vorbeifahrenden Fahrzeug,
Figur 2 die Einparksituation nach Figur 1, wobei das Fahrzeug in die Parklücke einfährt,
Figur 3 eine zweite Einparksituation mit einem an einer Parklücke vorbeifahrenden Fahrzeug und
Figur 4 die Einparksituation nach Figur 3, wobei das Fahrzeug in die Parklücke einfährt.

### Beschreibung der Ausführungsbeispiele

In sämtlichen Figuren sind sich entsprechende Elemente mit jeweils gleichen Bezugszeichen versehen.

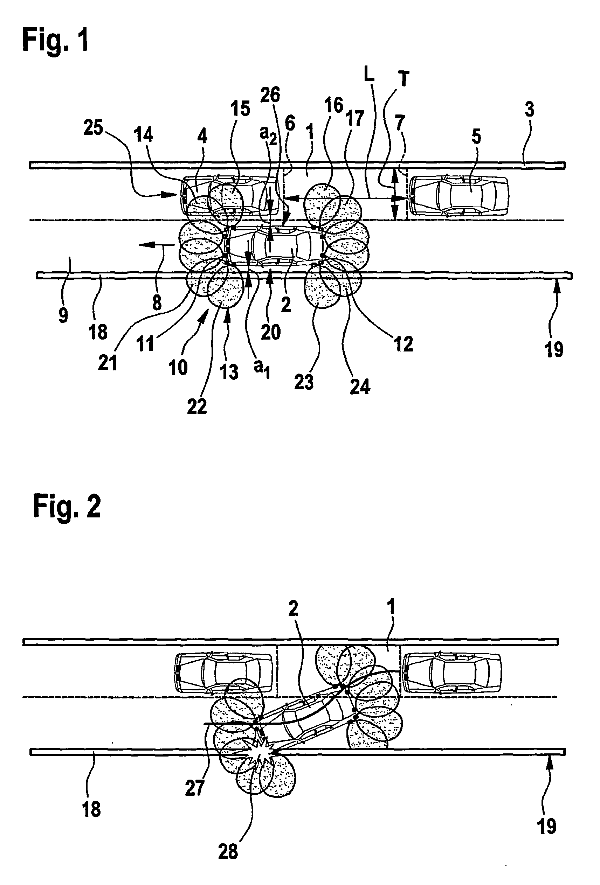

Figur 1 zeigt ein in eine seitliche Parklücke 1 einzuparkendes Fahrzeug 2. Die Parklücke 1 befindet sich an einem Bordstein 3 zwischen zwei bereits geparkten Fahrzeugen 4, 5. Von den geparkten Fahrzeugen 4, 5 begrenzt ein erstes Fahrzeug 4 die Parklücke 1 an deren vorderen Ende 6, und ein zweites Fahrzeug 5 begrenzt die Parklücke 1 an deren hinteren Ende 7.

Das einzuparkende Fahrzeug 2, das vorwärts in einer durch einen Pfeil 8 gekennzeichneten Richtung auf einer Fahrbahn 9 an der Parklücke 1 vorbeifährt, weist eine Sensoranordnung 10 auf. Die Sensoranordnung 10 umfasst sechs Ultraschallsensoren 11 in der Fahrzeugfront und sechs Ultraschallsensoren 12 in dem Fahrzeugheck. Ausgehend von den Ultraschallsensoren 11,12 ist jeweils eine Ultraschallkeule 13 zu erkennen.

Bei dem Vorbeifahren des einzuparkenden Fahrzeuges 2 an der Parklücke 1 wird die Parklücke 1, und zwar insbesondere die Länge L und die Tiefe T der Parklücke 1, mittels der Sensoranordnung 10 erfasst. Zu dieser Erfassung dienen die jeweils beiden äußersten, der Parklücke 1 zugewandten Ultraschallsensoren 11, 12 in der Fahrzeugfront und dem Fahrzeugheck mit ihren zugehörigen Ultraschallkeulen 14, 15, 16, 17.

Gleichzeitig wird während des Vorbeifahrens des Fahrzeuges 2 an der Parklücke 1 mittels der Sensoranordnung 10 ein Abstand a1 zu einem von einem eine Begrenzung der Fahrbahn 9 darstellenden und von einem Bordstein 18 gebildeten Hindernis 19 gemessen. Dieses Hindernis 19 ist auf einer der Parklücke 1 abgewandten, ersten Längsseite 20 des Fahrzeuges 2 angeordnet. Zu dem in Figur 1 erfassten Zeitpunkt erfolgt die Messung des vorgenannten Abstandes a1 mittels zumindest eines der jeweils äußersten, der Parklücke 1 abgewandten Ultraschallsensoren 11,12 in der Fahrzeugfront und dem Fahrzeugheck mit ihren zugehörigen Ultraschallkeulen 21, 22, 23, 24.

Zur vorgenannten Abstandsmessung ist es hinreichend, Signale eines dieser Ultraschallsensoren 11, 12 zu verwenden. Vorteilhaft ist hingegen, Signale mehrerer oder aller Ultraschallsensoren 11,12 zur Messung des Abstandes a1 zwischen einzuparkendem Fahrzeug 2 und Hindernis 19 heranzuziehen. Beispielsweise in einer Auswerteeinheit können sämtliche Signale bewertet und weiterverarbeitet werden, wodurch zum Beispiel auch eine Plausibilitätskontrolle ermöglicht wird.

Weiterhin wird mittels der Sensoranordnung 10 ein Abstand a2 des Fahrzeuges 2 zu einem von dem oben genannten parkenden, ersten Fahrzeug 4 gebildeten Hindernis 25 auf der der Parklücke 1 zugewandten, zweiten Längsseite 26 des Fahrzeuges 2 gemessen.

Figur 2 zeigt die Einparksituation nach Figur 1 zu einem späteren Zeitpunkt: Das einzuparkende Fahrzeug 2 fährt - einer Einparkbahn 27 folgend - in die Parklücke 1 ein. Im Bereich der vorderen linken Fahrzeugecke droht es zu einer Kollision, symbolisiert durch einen Stern 28, mit dem Hindernis 19 auf der ersten Längsseite 20 des Fahrzeuges 2 zu kommen. In diesem Ausführungsbeispiel handelt es sich bei vorgenanntem Hindernis 19 um einen Bordstein 18, der überfahren werden kann, so dass der Einparkvorgang ohne Gefahr einer Beschädigung des Fahrzeuges 2 fortgesetzt werden kann. Die Entscheidung über das Fortsetzen des Einparkvorganges kann entweder in und mit der Auswerteeinheit oder von einem Bediener, insbesondere Fahrer, des einparkenden Fahrzeuges 2 getroffen werden.

Sowohl während des Vorbeifahrens des Fahrzeuges 2 an der Parklücke 1 (vgl. Figur 1) als auch während des Einfahrens des Fahrzeuges 2 in die Parklücke 1 (vgl. Figur 2) werden die oben beschriebenen Abstände a1, a2 zu den Hindernissen 19, 25 kontinuierlich gemessen.

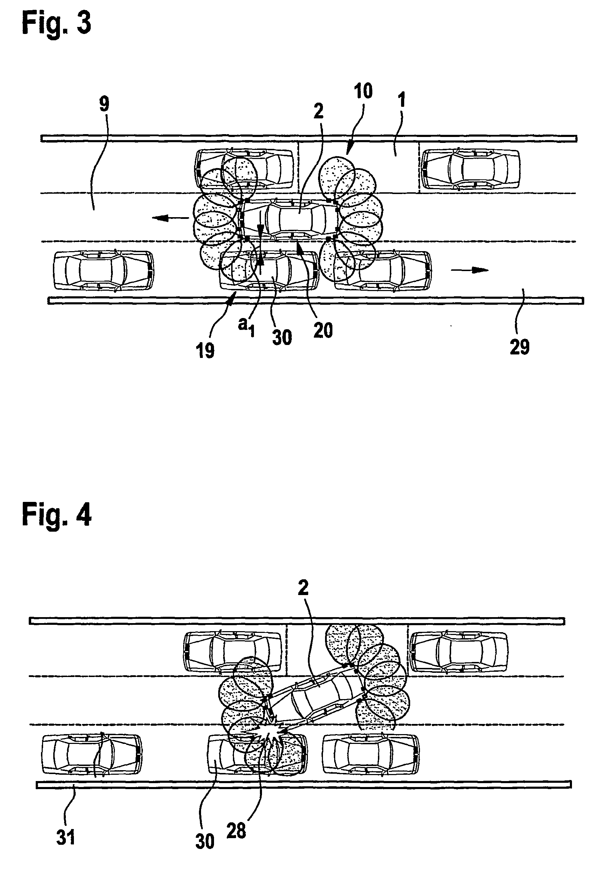

Eine abweichende Einparksituation stellt Figur 3 dar: Ein einzuparkendes Fahrzeug 2 fährt auf einer Fahrbahn 9 einer mehrspurigen Straße an einer Parklücke 1 vorbei, wobei die Parklücke 1 von einer Sensoranordnung 10 des Fahrzeuges 2 erfasst wird.

Hier bilden dem einzuparkenden Fahrzeug 2 auf einer Gegenfahrbahn 29 entgegenkommende Fahrzeuge 30 des fließenden Verkehrs potentielle Hindernisse 19 bei einem Einparken in die Parklücke 1. Mittels der Sensoranordnung 10, die der Sensoranordnung des einzuparkenden Fahrzeuges nach Figuren 1, 2 entspricht, wird ein Abstand a1 zu den entgegenkommenden Fahrzeugen 30 auf der der Parklücke 1 abgewandten, ersten Längsseite 20 des einzuparkenden Fahrzeuges 2 gemessen.

Symbolisiert durch einen Stern 28 zeigt Figur 4 eine potentielle Kollision der vorderen linken Fahrzeugecke des einzuparkenden Fahrzeuges 2 mit einem der entgegenkommenden Fahrzeuge 30. Es erfolgt eine Signalisation eines Geringabstandes an den Fahrer des einzuparkenden Fahrzeuges 2, der daraufhin den Einparkvorgang abbrechen kann. Bei dem Ausführungsbeispiel nach Figuren 3, 4 kann es sich anstelle der eine Kollisionsgefahr für das einzuparkende Fahrzeug 2 bedeutenden entgegenkommenden Fahrzeuge 30 auch um an einem der Parklücke 1 gegenüberliegenden Fahrbahnrand 31 abgestellte Fahrzeuge handeln.

## Patentansprüche

1. Verfahren zur Unterstützung eines Einparkvorganges eines eine Sensoranordnung aufweisenden Fahrzeuges in eine seitlich zu dem Fahrzeug angeordnete Parklücke, wobei mittels der Sensoranordnung die Parklücke während eines Vorbeifahrens des Fahrzeuges an der Parklücke erfasst wird, wobei während des Vorbeifahrens des Fahrzeuges (2) an der Parklücke (1) mittels der Sensoranordnung (10) ein Abstand (a1) zu einem Hindernis (19) auf der der Parklücke (1) abgewandten, ersten Längsseite (20) des Fahrzeuges (2) gemessen wird, **dadurch gekennzeichnet, dass** von der Auswerteeinheit unter Berücksichtigung zumindest des gemessenen Abstandes (a1) zu dem Hindernis (19) auf der ersten Längsseite (20) des Fahrzeuges , (2) eine von dem Fahrzeug (2) während des Einparkvorganges zu verfolgene Einparkbahn (27) ermittelt wird.

2. Verfahren nach Anspruch 1, **dadurch gekennzeichnet, dass** während eines Einfahrens des Fahrzeuges (2) in die Parklücke. (1) mittels der Sensoranordnung (10) ein Abstand (a1) zu dem Hindernis. (19) auf der ersten Längsseite (20) des Fahrzeuges (2) gemessen wird.

3. Verfahren nach einem der Ansprüche 1 und 2, **dadurch gekennzeichnet, dass** während des Vorbeifahrens des Fahrzeuges (2) an der Parklücke (1) und/oder während des Einfahrens des Fahrzeuges (2) in die Parklücke (1) mittels der Sensoranordnung (10) ein Abstand (a2) zu einem Hindernis (25) auf der der Parklücke (1) zugewandten, zweiten Längsseite (26) des Fahrzeuges (2) gemessen wird.

4. Verfahren nach einem der vorhergehenden Ansprüche, **dadurch gekennzeichnet, dass** der Abstand (a1) zu dem Hindernis (19) auf der ersten Längsseite (20) und/oder der Abstand (a2) zu dem Hindernis (19) auf der zweiten Längsseite (26) des Fahrzeuges (2) während des Vorbeifahrens an der Parklücke (1) und/oder während des Einfahrens in die Parklücke (1) kontinuierlich gemessen wird.

5. Verfahren nach einem der vorhergehenden Ansprüche, **dadurch gekennzeichnet, dass** während des Vorbeifahrens des Fahrzeuges (2) an der Parklücke (1) mittels der Sensoranordnung (10) die Länge (L) der Parklücke (1) gemessen wird.

6. Verfahren nach einem der vorhergehenden Ansprüche, **dadurch gekennzeichnet, dass** während des Vorbeifahrens des Fahrzeuges (2) an der Parklücke (1) mittels der Sensoranordnung (10) die Tiefe (T) der Parklücke (1) gemessen wird.

7. Verfahren nach einem der vorhergehenden Ansprüche, **dadurch gekennzeichnet, dass** zumindest der gemessene Abstand (a1) zu dem Hindernis (19) auf der ersten Längsseite (20) des Fahrzeuges (2) in einer Auswerteeinheit mit einem in der Auswerteeinheit gespeicherten Mindestabstand verglichen wir.

8. Verfahren nach Anspruch 7, **dadurch gekennzeichnet, dass** bei einem Unterschreiten des Mindestabstandes durch den gemessenen Abstand (a1) eine Signalisation eines Geringäbstandes an einen Fahrzeugbediener erfolgt.

9. Verfahren nach einem der vorhergehenden Ansprüche, **dadurch gekennzeichnet, dass** mittels eines Überbrückungselementes die Signalisation des Geringabstandes und/oder die Berücksichtigung des gemessenen Abstandes (a1) zur Einparkbahnermittlung unterdrückt wird.

10. Vorrichtung zur Durchführung eines Verfahrens nach einem der vorhergehenden Ansprüche für ein Fahrzeug, wobei eine zum gleichzeitigen Messen eines Abstandes (a1) zu einem Hindernis (19) auf einer einer Parklücke abgewandten, ersten Längsseite (20) des Fahrzeuges (2) und eines Abstandes (a2) zu einem Hindernis (25) auf einer der ersten Längsseite (20) gegenüberliegenden, zweiten Längsseite (26) des Fahrzeuges (2) geeignete Sensoranordnung (10) vorgesehen ist, **dadurch gekennzeichnet, dass** von einer Auswerteeinheit unter Berücksichtigung zumindest des gemessenen Abstandes (a1) zu dem Hindernis (19) auf der ersten Längsseite (20) des Fahrzeuges (2) während des Vorbeifahrens des Fahrzeuges (2) an der Parklücke eine von dem Fahrzeug (2) während des Einparkvorganges zu verfolgende Einparkbahn (27) ermittelt wird.

## Claims

1. Method for assisting the performance of a parking manoeuvre of a vehicle having a sensor arrangement, into a parking space which is arranged laterally with respect to the vehicle, wherein the sensor arrangement senses the parking space while the vehicle travels past the parking space, wherein, while the vehicle (2) travels past the parking space (1), the sensor arrangement (10) measures a distance (a1) from an obstacle (19) on the first longitudinal side (20) of the vehicle (2) facing away from the parking space (1), **characterized in that** a parking path (27) which is to be followed by the vehicle (2) during the parking process is determined by the evaluation unit by taking into account at least the measured distance (a1) from the obstacle (19) on the first longitudinal side (20) of the vehicle (2).

2. Method according to Claim 1, **characterized in that**, while the vehicle (2) is parking in the parking space (1), the sensor arrangement (10) measures a distance (a1) from the obstacle (19) on the first longitudinal side (20) of the vehicle (2).

3. Method according to one of Claims 1 and 2, **characterized in that**, while the vehicle (2) is travelling past the parking space (1) and/or while the vehicle (2) is parking in the parking space (1), the sensor arrangement (10) measures a distance (a2) from an obstacle (25) on the second longitudinal side (26), facing the parking space (1), of the vehicle (2).

4. Method according to one of the preceding claims, **characterized in that** the distance (a1) from the obstacle (19) on the first longitudinal side (20) and/or the distance (a2) from the obstacle (19) on the second longitudinal side (26) of the vehicle (2) is measured continuously while said vehicle (2) travels past the parking space (1) and/or while it parks in the parking space (1).

5. Method according to one of the preceding claims, **characterized in that**, while the vehicle (2) is travelling past the parking space (1), the sensor arrangement (10) measures the length (L) of the parking space (1).

6. Method according to one of the preceding claims, **characterized in that**, while the vehicle (2) is travelling past the parking space (1), the sensor arrangement (10) measures the depth (T) of the parking space (1).

7. Method according to one of the preceding claims, **characterized in that** at least the measured distance (a1) from the obstacle (19) on the first longitudinal side (20) of the vehicle (2) is compared, in an evaluation unit, with a minimum distance which is stored in the evaluation unit.

8. Method according to Claim 7, **characterized in that**, when the measured distance (a1) drops below the minimum distance, a small distance is signalled to the vehicle operator.

9. Method according to one of the preceding claims, **characterized in that** the signalling of the small distance and/or the taking into account of the measured distance (a1) in order to determine the parking path is suppressed by means of a bypass element.

10. Device for carrying out a method according to one of the preceding claims for a vehicle, wherein a sensor arrangement (10) which is suitable for simultaneously measuring a distance (a1) from an obstacle (19) on a first longitudinal side (20), facing away from a parking space, of the vehicle (2) and a distance (a2) from an obstacle (25) on a second longitudinal side (26), facing the first longitudinal side (20), of the vehicle (2) is provided, **characterized in that** an evaluation unit determines, by taking into account at least the measured distance (a1) from the obstacle (19) on the first longitudinal side (20) of the vehicle (2) while the vehicle (2) travels past the parking space, a parking path (27) which is to be followed by the vehicle (2) during the parking process.

## Revendications

1. Procédé d'assistance d'une manoeuvre de stationnement d'un véhicule présentant un arrangement de capteurs dans une place de stationnement disposée latéralement par rapport au véhicule, la place de stationnement étant détectée au moyen de l'arrangement de détecteurs pendant un passage du véhicule à côté de la place de stationnement, un écart (a1) par rapport à un obstacle (19) du premier côté longitudinal (20) du véhicule (2), à l'opposé de la place de stationnement (1), étant mesuré au moyen de l'arrangement de capteurs (10) pendant le passage du véhicule (2) à côté de la place de stationnement (1), **caractérisé en ce qu'**une trajectoire de stationnement (27) à suivre par le véhicule (2) pendant la manoeuvre de stationnement est déterminée par l'unité d'interprétation en tenant compte au moins de l'écart mesuré (a1) par rapport à l'obstacle (19) du premier côté longitudinal (20) du véhicule (2).

2. Procédé selon la revendication 1, **caractérisé en ce qu'**un écart (a1) par rapport à l'obstacle (19) du premier côté longitudinal (20) du véhicule (2) est mesuré au moyen de l'arrangement de capteurs (10) pendant une entrée du véhicule (2) dans la place de stationnement (1).

3. Procédé selon l'une des revendications 1 et 2, **caractérisé en ce qu'**un écart (a2) par rapport à un obstacle (25) du deuxième côté longitudinal (26) du véhicule (2), faisant face à la place de stationnement (1), est mesuré au moyen de l'arrangement de capteurs (10) pendant le passage du véhicule (2) à côté de la place de stationnement (1) et/ou pendant l'entrée du véhicule (2) dans la place de stationnement (1).

4. Procédé selon l'une des revendications précédentes, **caractérisé en ce que** l'écart (a1) par rapport à l'obstacle (19) du premier côté longitudinal (20) et/ou l'écart (a2) par rapport à l'obstacle (19) du deuxième côté longitudinal (26) du véhicule (2) est mesuré continuellement pendant le passage du véhicule (2) à côté de la place de stationnement (1) et/ou pendant l'entrée dans la place de stationnement (1).

5. Procédé selon l'une des revendications précédentes, **caractérisé en ce que** la longueur (L) de la place de stationnement (1) est mesurée au moyen de l'arrangement de capteurs (10) pendant le passage du véhicule (2) à côté de la place de stationnement (1).

6. Procédé selon l'une des revendications précédentes, **caractérisé en ce que** la profondeur (T) de la place de stationnement (1) est mesurée au moyen de l'arrangement de capteurs (10) pendant le passage du véhicule (2) à côté de la place de stationnement (1).

7. Procédé selon l'une des revendications précédentes, **caractérisé en ce qu'**au moins l'écart (a1) mesuré par rapport à l'obstacle (19) du premier côté longitudinal (20) du véhicule (2) est comparé dans une unité d'interprétation avec un écart minimum mémorisé dans l'unité d'interprétation.

8. Procédé selon la revendication 7, **caractérisé en ce que** si l'écart mesuré (a1) devient inférieur à l'écart minimum, il se produit une signalisation d'un écart faible à l'attention d'un conducteur du véhicule.

9. Procédé selon l'une des revendications précédentes, **caractérisé en ce que** la signalisation de l'écart faible et/ou la prise en compte de l'écart mesuré (a1) est inhibée au moyen d'un élément de court-circuitage pour déterminer la trajectoire de stationnement.

10. Dispositif pour mettre en oeuvre un procédé selon l'une des revendications précédentes pour un véhicule, un arrangement de capteurs (10) approprié étant prévu pour mesurer simultanément un écart (a1) par rapport à un obstacle (19) du premier côté longitudinal (20) du véhicule (2), à l'opposé d'une place de stationnement (1), et un écart (a2) par rapport à un obstacle (25) du deuxième côté longitudinal (26) du véhicule (2), à l'opposé du premier côté longitudinal (20), **caractérisé en ce qu'**une trajectoire de stationnement (27) à suivre par le véhicule (2) pendant la manoeuvre de stationnement est déterminée par une unité d'interprétation en tenant compte au moins de l'écart mesuré (a1) par rapport à l'obstacle (19) du premier côté longitudinal (20) du véhicule (2) pendant le passage du véhicule (2) à côté de la place de stationnement (1).
